# EUROPEAN PATENT SPECIFICATION

(11) **EP 2 661 118 B1**
(45) Date of publication and mention of the grant of the patent: **26.09.2018**
(21) Application number: 11853406.4
(22) Date of filing: 15.12.2011
(51) Int. Cl.: H04W 24/04, H04W 88/12, H04W 92/14

(54) **COMMUNICATION METHOD, DEVICE AND SYSTEM BASED ON BASE STATION CONTROL APPARATUS GROUP**
KOMMUNIKATIONSVERFAHREN, VORRICHTUNG UND SYSTEM AUF BASIS EINER BASISSTATIONSSTEUERGERÄTEGRUPPE
PROCÉDÉ, DISPOSITIF ET SYSTÈME DE COMMUNICATION BASÉS SUR UN GROUPE D'APPAREILS DE COMMANDE DE STATIONS DE BASE

(30) Priority: 31.12.2010 CN 201010624358
(43) Date of publication of application: 06.11.2013
(73) Proprietor: Huawei Technologies Co., Ltd., Longgang District Shenzhen, Guangdong 518129 (CN)
(72) Inventor: LIU, Shaofeng, Shenzhen Guangdong 518129 (CN); QIN, Shengyi, Shenzhen Guangdong 518129 (CN); WANG, Shanshan, Shenzhen Guangdong 518129 (CN)
(74) Representative: Pfenning, Meinig & Partner mbB
(86) International application number: PCT/CN2011/084020
(87) International publication number: WO 2012/089025

(56) References cited:
- CN-A- 101 232 402
- CN-A- 101 247 567
- CN-A- 101 267 601
- CN-A- 102 111 790

## Description

### TECHNICAL FIELD

Embodiments of the present invention relate to communication technologies and, in particular, to a communication method, apparatus, and system based on a base station control device group.

### BACKGROUND

A base station subsystem in a communication system is a system device controlled by a core network node and communicating with terminals in a radio coverage area, and is mainly responsible for implementing functions such as radio transmission and reception and radio resource management. Functional entities of a base station subsystem may include a base station and a base station control device. The base station control device has a function of controlling one or more base stations, and is mainly responsible for radio network resource management, cell configuration data management, power control, positioning, and handover, and so on.

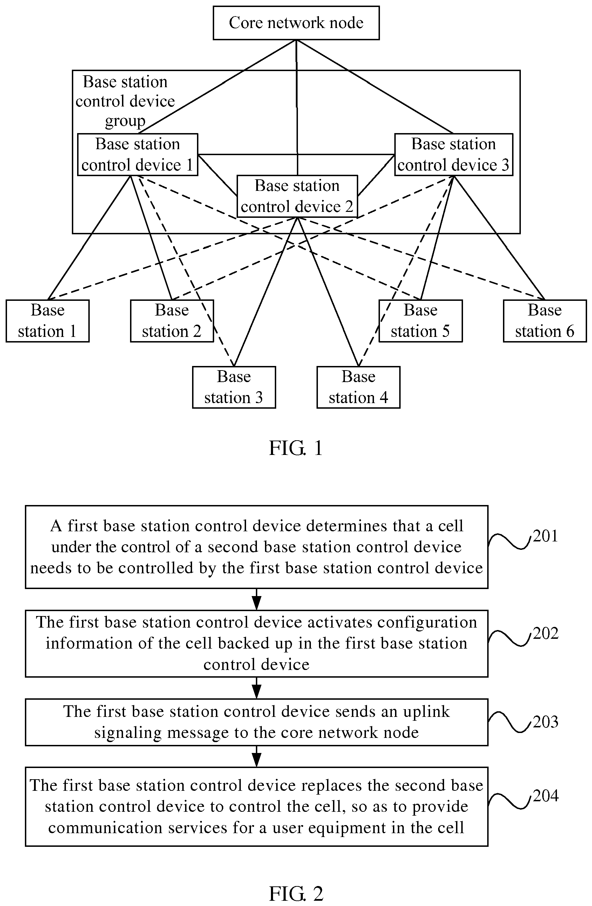

FIG. 1 is a schematic diagram of a network architecture of a base station control device group in the prior art. As shown in FIG. 1, multiple base station control devices under a same core network node or core network node pool (Pool) may be grouped as a base station control device group. Configuration information of a cell (including base station information and cell information) configured on a base station control device (for example, a base station control device 1) in the base station control device group may be backed up to at least another base station control device (such as a base station control device 2 and a standby base station control device 3) in the base station control device group. For example, in a normal situation, for a base station 1 and a cell 1 corresponding to the base station 1, the base station control device 1 acts as an active base station control device, and configuration information of the cell 1 (including information of the base station 1 and information of the cell 1) may be backed up to the base station control device 2 and the standby base station control device 3. In this case, the base station control device 2 and the standby base station control device 3 act as standby base station control devices for the base station 1 and the cell 1 corresponding to the base station 1.

In the scenario of the base station control device group, the standby base station control device may become an active base station control device, but the resulting change of cell homing is invisible to the core network. As a result, communication services of a user equipment (User Equipment, briefed as UE) in the cell cannot be performed normally.

CN 101232402 A discloses a radio network system, which includes a controller resource pool including all or some controllers in a radio network. The controller resource pool includes a first controller and a second controller, where the first controller is used for establishing a master attribution link with a base station, and the second controller is used for establishing a slave attribution link with the base station; when the master attribution link fails, the second controller is used for establishing a new master attribution link with the base station. (Abstract)

CN 101247567 A discloses a method and a device for implementing a base station controller (BSC) POOL, where the method includes the following steps: transmitting a command of updating a BSC to a mobile switching center (MSC); and receiving a feedback of the MSC to the update command. (Abstract)

### SUMMARY

Embodiments of the present invention provide a communication method, an apparatus, and a system based on a base station control device group, which are used to solve the problem that communication services of a user equipment in a cell cannot be performed normally because the change of cell homing in a base station control device group is unknown to a core network.

In a first aspect, the present invention provides a communication method based on a base station control device group, including:
determining, by a first base station control device, that a cell under control of a second base station control device needs to be controlled by the first base station control device, where the first base station control device and the second base station control device belong to a same base station control device group;
activating, by the first base station control device, configuration information of the cell backed up in the first base station control device;
sending, by the first base station control device, an uplink signaling message to a core network node, where the uplink signaling message carries identity information of the cell; and
after the core network node establishes a mapping relationship between the first base station control device and the cell according to the uplink signaling message, replacing, by the first base station control device, the second base station control device to control the cell, so as to provide communication services for a user equipment in the cell;
where the determining, by the first base station control device, that the cell under the control of the second base station control device needs to be controlled by the first base station control device comprises:
   in a situation where the core network node works normally, sending, by the first base station control device, a handshake message to the second base station control device, and judging whether a response message returned by the second base station control device can be received; and
   if the response message returned by the second base station control device cannot be received, determining, by the first base station control device, that the cell under the control of the second base station control device needs to be controlled by the first base station control device.

In a second aspect, the present invention provides another communication method based on a base station control device group, including:
obtaining, by a core network node, an uplink signaling message sent by a first base station control device, where the uplink signaling message is sent by the first base station control device after the first base station control device determines that a cell under control of a second base station control device needs to be controlled by the first base station control device, and activates configuration information of the cell backed up in the first base station control device, where the uplink signaling message carries identity information of the cell, and the first base station control device and the second base station control device belong to a same base station control device group; and
establishing, by the core network node, a mapping relationship between the first base station control device and the cell according to the uplink signaling message, where the mapping relationship is used in a process in which the first base station control device replaces the second base station control device to control the cell so as to provide communication services for a user equipment in the cell;
where the determining, by the first base station control device, that the cell under the control of the second base station control device needs to be controlled by the first base station control device comprises:
   in a situation where the core network node works normally, sending, by the first base station control device, a handshake message to the second base station control device, and judging whether a response message returned by the second base station control device can be received; and
   if the response message returned by the second base station control device cannot be received, determining, by the first base station control device, that the cell under the control of the second base station control device needs to be controlled by the first base station control device.

In a third aspect, the present invention further provides a standby base station control device, including:
a determining module, configured to determine that a cell under control of an active base station control device needs to be controlled by the standby base station control device, where the standby base station control device and the active base station control device belong to a same base station control device group;
an activating module, configured to activate configuration information of the cell backed up in the standby base station control device;
a sending module, configured to send an uplink signaling message to a core network node, where the uplink signaling message carries identity information of the cell; and
a control module, configured to control the cell after the core network node establishes a mapping relationship between the standby base station control device and the cell according to the uplink signaling message, so as to provide communication services for a user equipment in the cell;
where the determining module is specifically configured to:
   in a situation where the core network node works normally, send a handshake message to the active base station control device, and judge whether a response message returned by the active base station control device can be received, and if the response message returned by the active base station control device cannot be received, determine that the cell under the control of the active base station control device needs to be controlled by the standby base station control device.

In a fourth aspect, the present invention further provides a communication system based on a base station control device group, where the system includes the above standby base station control device.

As can be known from the above technical solutions, the first base station control device determines that the cell under the control of the second base station control device in the same base station control device group needs to be controlled by the first base station control device, and thus activates the configuration information of the cell backed up in the first base station control device, and sends the uplink signaling message carrying the identity information of the cell to the core network node, so that the first base station control device is able to replace the second base station control device to control the cell after the core network node establishes the mapping relationship between the first base station control device and the cell according to the uplink signaling message, so as to provide communication services for the user equipment in the cell. In this way, the problem that communication services of a user equipment in a cell cannot be performed normally because the change of cell homing in the base station control device group is unknown to the core network can be solved, and it is thereby ensured that the communication services of the user equipment in the cell in the base station control device group can be performed normally.

### BRIEF DESCRIPTION OF DRAWINGS

To describe the technical solutions in embodiments of the present invention or in the prior art more clearly, the following briefly introduces the accompanying drawings needed for describing the embodiments or the prior art. Apparently, the accompanying drawings in the following description illustrate merely some embodiments of the present invention, and persons of ordinary skill in the art may still derive other drawings from these accompanying drawings without creative effort.
FIG. 1 is a schematic diagram of a network architecture of a base station control device group in the prior art;
FIG. 2 is a schematic flowchart of a communication method based on a base station control device group according to a first embodiment of the present invention;
FIG. 3A is a schematic diagram of data backup based on a base station controller in a base station control device group according to the first embodiment of the present invention;
FIG. 3B is a schematic diagram of activating, by another base station control device, backup data after communication between a base station control device in FIG. 3A and a core network node is interrupted;
FIG. 4 is a schematic flowchart of another communication method based on a base station control device group according to a second embodiment of the present invention;
FIG. 5 is a schematic flowchart of a communication processing method based on a base station control device group according to a third embodiment of the present invention;
FIG. 6A is a schematic flowchart of a communication processing method based on a base station control device group according to a fourth embodiment of the present invention;
FIG. 6B is a schematic diagram of a network architecture of another base station control device group according to an embodiment of the present invention;
FIG. 7 is a schematic structural diagram of a standby base station control device according to a fifth embodiment of the present invention; and
FIG. 8 is a schematic structural diagram of a core network node according to a sixth embodiment of the present invention.

### DESCRIPTION OF EMBODIMENTS

The invention is set out in the appended set of claims, the further examples called embodiments in the description are illustrative examples, not embodiments claimed in the present application. To make the objectives, technical solutions, and advantages of the present invention clearer, the following clearly and comprehensively describes the technical solutions in examples called embodiments useful for understanding the invention with reference to the accompanying drawings.

FIG. 2 is a schematic flowchart of a communication method based on a base station control device group according to a first embodiment of the present invention. As shown in FIG. 2, the communication method based on a base station control device group according to this embodiment may include the following steps:
Step 201: A first base station control device determines that a cell under the control of a second base station control device needs to be controlled by the first base station control device, where the first base station control device and the second base station control device belong to a same base station control device group.

In this step, the first base station control device may determine, through a handshake mechanism, that the cell under the control of the second base station control device needs to be controlled by the first base station control device. Specifically, in a situation where the core network node works normally, the first base station control device may send a handshake message to the second base station control device, and judge whether a response message returned by the second base station control device can be received. If the returned by the second base station control device cannot be received, the first base station control device determines that the cell under the control of the second base station control device needs to be controlled by the first base station control device.

Specifically, the first base station control device may directly send the handshake message to the second base station control device, and if the response message returned by the second base station control device cannot be received, it indicates that a failure occurs at the second base station control device, so the first base station control device may determine that the cell under the control of the second base station control device needs to be controlled by the first base station control device. Alternatively, the first base station control device may also send the handshake message to the second base station control device via the core network node, and if the response message returned by the second base station control device cannot be received, it indicates that the second base station control device is not available (two causes may be included: one is that a failure occurs at the second base station control device, and the other is that a communication link between the second base station control device and the core network node breaks), so the first base station control device may determine that the cell under the control of the second base station control device needs to be controlled by the first base station control device.

In this step, the first base station control device may also determine, according to a notification message obtained from a base station under the control of the second base station control device, that a cell corresponding to the base station under the control of the second base station control device needs to be controlled by the first base station control device. Specifically, in a situation where the core network node works normally, the base station under the control of the second base station control device may send a handshake message to the second base station control device, and judge whether a response message returned by the second base station control device can be received. If the response message returned by the second base station control device cannot be received, the base station sends a notification message to the first base station control device, where the notification message is used to notify that the cell corresponding to the base station needs to be controlled by the first base station control device.

Step 202: The first base station control device activates configuration information of the cell backed up in the first base station control device.

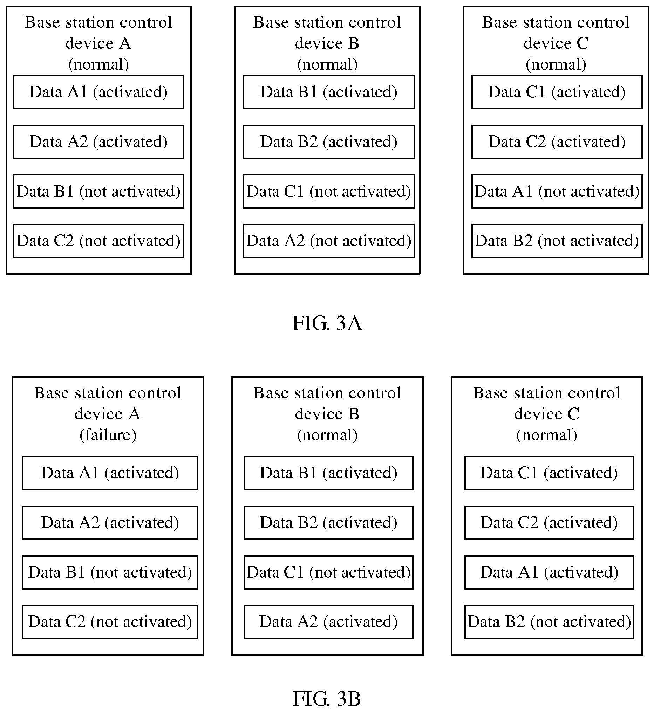

Specifically, the configuration information of the cell under the control of the second base station control device may be backed up in the first base station control device in advance according to a backup strategy (the backup strategy may be designated according to a load sharing principle) of the base station control device group. When it is determined that the cell under the control of the second base station control device needs to be controlled by the first base station control device, the configuration information of the cell backed up in the first base station control device may be activated. The backup strategy of the base station control device group may specifically be as follows:
Assuming that three base station control devices, that is, base station control device A, base station control device B, and base station control device C, constitute a base station control device group, data of each base station control device (configuration information of cells under the control of the base station control device, specifically including base station information and cell information) is divided into two parts, and the configuration information of the cells corresponding to each base station is respectively backed up to other base station control devices in the group by using the base station as a unit, as shown in FIG. 3A. After determining that the cells under the control of base station control device A in the group (that is, the cells whose configuration information is backed up in base station control device B and base station control device C) need to be controlled by base station control device B and base station control device C, base station control device B and base station control device C activate the configuration information of the cells backed up thereon, as shown in FIG. 3B. When a failure occurs at base station control device A, or a communication link between base station control device A and the core network node breaks, because base station control device A is unable to provide communication services for a user equipment in the cell under the control of base station control device A, base station control device B may activate configuration information of a part of cells of base station control device A, which is backed up in base station control device B, and base station control device B controls the part of cells. Similarly, base station control device C may activate configuration information of the other part of cells of base station control device A, which is backed up in base station control device C, and base station control device C controls this part of cells.

It should be noted that the base station in this embodiment is a physical node, while the cell corresponding to the base station is a logical concept, and that one base station may correspond to one or more cells.

Step 203: The first base station control device sends an uplink signaling message to the core network node, where the uplink signaling message carries identity information of the cell.

The uplink signaling message may be an existing protocol message between an access network device and the core network node, including but not limited to an existing message like a call management service request (Call Management Service Request, CM Service Request) message and a location updating request (LOCATION UPDATING REQUEST) message in a GSM network; or the uplink signaling message may also be a newly-extended protocol message between an access network device and the core network node, such as a cell homing change notification message in a WCDMA network, which will not be limited in this embodiment.

Specifically, in this step, the first base station control device may specifically send the identity information of the cell to the core network node actively by using the uplink signaling message including the identity information of the cell, or, may also send the identity information of the cell to the core network node by using the uplink signaling message including the identity information of the cell after obtaining a call request message from the user equipment in the cell.

Step 204: After the core network node establishes a mapping relationship between the first base station control device and the cell according to the uplink signaling message, the first base station control device replaces the second base station control device to control the cell, so as to provide communication services for the user equipment in the cell.

In this embodiment, the first base station control device determines that the cell under the control of the second base station control device in the same base station control device group needs to be controlled by the first base station control device, and thus activates the configuration information of the cell backed up in the first base station control device, and sends the uplink signaling message carrying the identity information of the cell to the core network node, so that the first base station control device is able to replace the second base station control device to control the cell after the core network node establishes the mapping relationship between the first base station control device and the cell according to the uplink signaling message, so as to provide communication services for the user equipment in the cell. In this way, the problem that communication services of a user equipment in a cell cannot be performed normally because the change of cell homing in the base station control device group is unknown to the core network can be solved, and it is thereby ensured that the communication services of the user equipment in the cell in the base station control device group can be performed normally.

In addition, in the communication method based on a base station control device group according to this embodiment, an A-interface signaling message between the first base station control device and the core network node does not need to be changed, and merely an existing signaling message is used to send the identity information of the cell to the core network node; thereby, the core network node is able to establish the mapping relationship between the first base station control device and the cell, the existing networking is not affected, and network compatibility can be ensured.

It should be noted that the communication method based on a base station control device group according to this embodiment is applicable to various mobile communication networks, such as a Global System for Mobile communication (Global System for Mobile communication, briefed as GSM) network, a Code Division Multiple Access (Code Division Multiple Access, briefed as CDMA) network, and a Wideband Code Division Multiple Access (Wideband Code Division Multiple Access, briefed as WCDMA) network.

Correspondingly, the core network node may be a mobile switching center (mobile switching center, briefed as MSC), and may also be a media gateway (Media Gateway, briefed as MGW).

Correspondingly, the base station may be a base transceiver station (Base Transceiver Station, briefed as BTS) in the GSM network or the CDMA network, and may also be a node B (NodeB) in the WCDMA network. The first base station control device or the second base station control device may be a base station controller (Base Station Controller, briefed as BSC) in the GSM network or the CDMA network, and may also be a radio network controller (Radio Network Controller, briefed as RNC) in the WCDMA network.

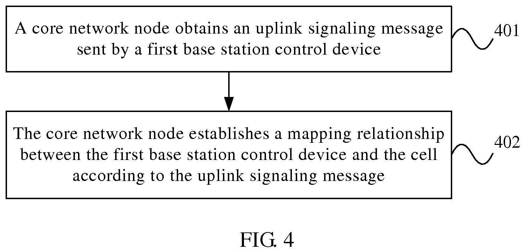

FIG. 4 is a schematic flowchart of another communication method based on a base station control device group according to a second embodiment of the present invention. As shown in FIG. 4, the communication method based on a base station control device group according to this embodiment may include the following steps:
Step 401: A core network node obtains an uplink signaling message sent by a first base station control device.

The uplink signaling message is sent by the first base station control device after the first base station control device determines that a cell under control of a second base station control device needs to be controlled by the first base station control device, and activates configuration information of the cell backed up in the first base station control device, where the uplink signaling message carries identity information of the cell, and the first base station control device and the second base station control device belong to a same base station control device group.

In this step, the first base station control device may determine, through a handshake mechanism, that the cell under the control of the second base station control device needs to be controlled by the first base station control device. Specifically, in a situation where the core network node works normally, the first base station control device may send a handshake message to the second base station control device, and judge whether a response message returned by the second base station control device can be received. If the response message returned by the second base station control device cannot be received, the first base station control device determines that the cell under the control of the second base station control device needs to be controlled by the first base station control device.

Specifically, the first base station control device may directly send the handshake message to the second base station control device, and if the response message returned by the second base station control device cannot be received, it indicates that a failure occurs at the second base station control device, so the first base station control device may determine that the cell under the control of the second base station control device needs to be controlled by the first base station control device. Alternatively, the first base station control device may also send the handshake message to the second base station control device via the core network node, and if the response message returned by the second base station control device cannot be received, it indicates that the second base station control device is not available (two causes may be included: one is that a failure occurs at the second base station control device, and the other is that a communication link between the second base station control device and the core network node breaks), so the first base station control device may determine that the cell under the control of the second base station control device needs to be controlled by the first base station control device.

In this step, the first base station control device may also determine, according to an obtained notification message from a base station under the control of the second base station control device, that a cell corresponding to the base station under the control of the second base station control device needs to be controlled by the first base station control device. Specifically, in a situation where the core network node works normally, the base station under the control of the second base station control device may send a handshake message to the second base station control device, and judge whether a response message returned by the second base station control device can be received. If the response message returned by the second base station control device cannot be received, the base station sends a notification message to the first base station control device, where the notification message is used to notify that the cell corresponding to the base station needs to be controlled by the first base station control device.

Specifically, the configuration information of the cell under the control of the second base station control device may be backed up in the first base station control device in advance according to a backup strategy of the base station control device group. When it is determined that the cell under the control of the second base station control device needs to be controlled by the first base station control device, the configuration information of the cell backed up in the first base station control device may be activated, and the uplink signaling message carrying the identity information of the cell is sent to the core network node. For details about the backup strategy, reference may be made to related descriptions in the first embodiment of the present invention.

The uplink signaling message may be an existing protocol message between an access network device and the core network node, including but not limited to an existing message like a call management service request (Call Management Service Request, CM Service Request) message and a location updating request (LOCATION UPDATING REQUEST) message in a GSM network; or the uplink signaling message may also be a newly-extended protocol message between an access network device and the core network node, such as a cell homing change notification message in a WCDMA network, which will not be limited in this embodiment.

Specifically, in this step, the first base station control device may specifically send the identity information of the cell to the core network node actively by using the uplink signaling message including the identity information of the cell, or, may also send the identity information of the cell to the core network node by using the uplink signaling message including the identity information of the cell after obtaining a call request message from the user equipment in the cell.

Step 402: The core network node establishes a mapping relationship between the first base station control device and the cell according to the uplink signaling message.

The mapping relationship is used in a process in which the first base station control device replaces the second base station control device to control the cell so as to provide communication services for the user equipment in the cell.

Specifically, after establishing the mapping relationship between the first base station control device and the cell according to the uplink signaling message, the core network node may verify, according to the mapping relationship, an uplink message initiated by the user equipment in the cell via the first base station control device, and process the uplink message only if the mapping relationship between the cell identity carried in the uplink message and the first base station control device sending the uplink message is consistent with the mapping relationship established by the core network node, and then subsequent processes can be continued; or, paging may also be performed for the user equipment in the cell according to the mapping relationship, and specifically, the first base station control device corresponding to the identity information of the cell may be determined according to the identity information of the cell to which the user equipment to be paged belongs and the mapping relationship, and then the user equipment may be paged via the first base station control device.

In this embodiment, after the first base station control device determines that the cell under the control of the second base station control device in the same base station control device group needs to be controlled by the first base station control device, and therefore activates the configuration information of the cell backed up in the first base station control device, the core network node obtains the uplink signaling message carrying identity information of the cell from the first base station control device, so that the core network node is able to establish the mapping relationship between the first base station control device and the cell according to the uplink signaling message, therefore, the first base station control device is able to replace the second base station control device to control the cell, so as to provide communication services for the user equipment in the cell. In this way, the problem that communication services of a user equipment in a cell cannot be performed normally because the change of cell homing in the base station control device group is unknown to the core network can be solved, and it is thereby ensured that the communication services of the user equipment in the cell in the base station control device group can be performed normally.

In addition, in the communication method based on a base station control device group according to this embodiment of the present invention, an A-interface signaling message between the first base station control device and the core network node does not need to be changed, and merely an existing signaling message is used to send the identity information of the cell to the core network node; thereby, the core network node is able to establish the mapping relationship between the first base station control device and the cell, the existing networking is not affected, and network compatibility can be ensured.

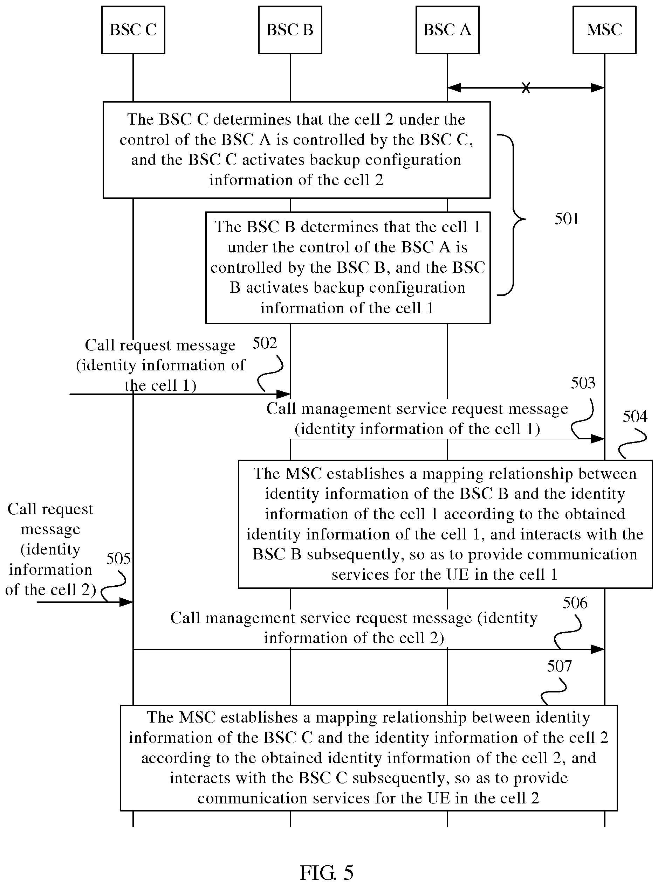

To make the method provided in this embodiment of the present invention more comprehensible, the GSM network is taken as an example below. FIG. 5 is a schematic flowchart of a communication processing method based on a base station control device group according to a third embodiment of the present invention. In this embodiment, one MSC is connected with three BSCs, that is, BSC A, BSC B, and BSC C, which constitute a BSC group. BSC A controls BTS 1 (cell 1) and BTS 2 (cell 2), BSC B controls BTS 3 (cell 3) and BTS 4 (cell 4), and BSC C controls BTS 5 (cell 5) and BTS 6 (cell 6). The three BSCs may constitute a BSC group (a BSC redundancy backup group). Configuration information of cells configured in each BSC in the BSC group is divided into two parts, which are backed up in the other two BSCs in the group, respectively, that is, configuration information of cell 3 and configuration information of cell 5 are backed up in BSC A, configuration information of cell 1 and configuration information of cell 6 are backed up in BSC B, and configuration information of cell 2 and configuration information of cell 4 are backed up in BSC C. As shown in FIG. 5, the communication processing method based on a base station control device group according to this embodiment may include the following steps:
Step 501: BSC B determines that cell 1 under the control of BSC A needs to be controlled by BSC B, and activates the backup configuration information of cell 1; BSC C determines that cell 2 under the control of BSC A is controlled by BSC C, and activates the backup configuration information of cell 2.
   For details about how BSC B determines that cell 1 under the control of BSC A needs to be controlled by BSC B and how BSC C determines that cell 2 under the control of BSC A needs to be controlled by BSC C, reference may be made to related contents in the first embodiment or the second embodiment of the present invention, which will not be repeated herein.
   Up to now, homing of cell 1 and cell 2 under the control of BSC A is changed, that is, cell 1 is controlled by BSC B, and cell 2 is controlled by BSC C.
Step 502: BSC B obtains a call request message from a UE in cell 1, where the call request message includes identity information of cell 1.
Step 503: BSC B sends a call management service request message to the MSC, where the call management service request message includes the identity information of cell 1.
Step 504: The MSC establishes a mapping relationship between identity information of BSC B and the identity information of cell 1 according to the obtained identity information of cell 1, and interacts with BSC B subsequently, so as to provide communication services for the UE in cell 1.
   Up to now, the MSC knows the homing relationship between cell 1 and BSC B, so that BSC B is able to replace BSC A to control cell 1 and provide communication services (including communication services like a subsequent call process and a process of paging the UE in the cell 1) for the UE in cell 1 via the MSC. For example, when the MSC needs to page a UE in cell 1, the MSC may determine the identity information of BSC B corresponding to the identity information of cell 1 according to the identity information of cell 1 and the mapping relationship, and then page the UE in cell 1 via BSC B.
Step 505: BSC C obtains a call request message from a UE in cell 2, where the call request message includes identity information of cell 2.
Step 506: BSC C sends a call management service request message to the MSC, where the call management service request message includes the identity information of cell 2.
Step 507: The MSC establishes a mapping relationship between identity information of BSC C and the identity information of cell 2 according to the obtained identity information of cell 2, and interacts with BSC C subsequently, so as to provide communication services for the UE in cell 2.

Up to now, the MSC knows the homing relationship between cell 2 and BSC C, so that BSC C is able to replace BSC A to control cell 2 and provide communication services (including communication services like a subsequent call process and a process of paging the UE in cell 2) for the UE in cell 2 via the MSC. For example, when the MSC needs to page a UE in the cell 2, the MSC may determine the identity information of BSC C corresponding to the identity information of cell 2 according to the identity information of cell 2 and the mapping relationship, and then page the UE in cell 2 via BSC C.

The above steps 502 to 504 and steps 505 to 507 are not executed in a fixed sequence, which will not be limited in this embodiment.

In this embodiment, when the communication between BSC A and the MSC is interrupted, the identity information of cell 1 under the control of BSC A and the identity information of cell 2 under the control of BSC A are sent to the MSC via BSC B and BSC C, respectively, by using a call management service request message, and then the MSC is able to establish the mapping relationship between BSC B and cell 1 and the mapping relationship between BSC C and cell 2, so that the UE in cell 1 and the UE in cell 2 are able to perform communication services by interacting with the MSC via BSC B and BSC C, respectively. Therefore, the problem that communication services of a UE in a cell cannot be performed normally because the change of cell homing in the BSC group is unknown to the core network can be solved, and it is thereby ensured that the communication services of the UE in the cell in the BSC group can be performed normally.

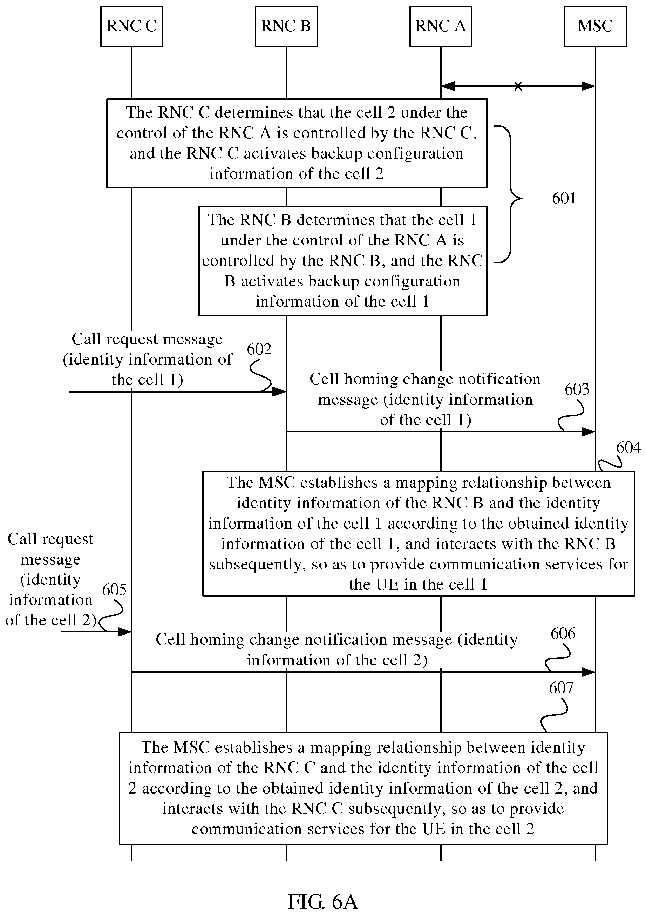

To make the method provided in this embodiment of the present invention more comprehensible, the WCDMA network is taken as an example below. FIG. 6A is a schematic flowchart of a communication processing method based on a base station control device group according to a fourth embodiment of the present invention. In this embodiment, one MSC is connected with three RNCs, that is, RNC A, RNC B, and RNC C, which constitute an RNC group. RNC A controls NodeB 1 (cell 1) and NodeB 2 (cell 2), RNC B controls NodeB 3 (cell 3) and NodeB 4 (cell 4), and RNC C controls NodeB 5 (cell 5) and NodeB 6 (cell 6). The three RNCs may constitute an RNC group (an RNC disaster tolerance backup group). Configuration information of cells configured in each RNC in the RNC group is divided into two parts, which are respectively backed up in the other two RNCs in the group, that is, configuration information of cell 3 and configuration information of cell 5 are backed up in RNC A, configuration information of cell 1 and configuration information of cell 6 are backed up in RNC B, and configuration information of the cell 2 and configuration information of cell 4 are backed up in the RNC C. As shown in FIG. 6A, the communication processing method based on a base station control device group according to this embodiment may include the following steps:
Step 601: RNC B determines that cell 1 under the control of RNC A needs to be controlled by RNC B, and activates the backup configuration information of cell 1; RNC C determines that cell 2 under the control of RNC A is controlled by RNC C, and activates the backup configuration information of cell 2.
   For details about how RNC B determines that cell 1 under the control of RNC A needs to be controlled by RNC B and how RNC C determines that cell 2 under the control of RNC A needs to be controlled by RNC C, reference may be made to related contents in the first embodiment or the second embodiment of the present invention, which will not be repeated herein.
   Up to now, homing of cell 1 and cell 2 under the control of RNC A is changed, that is, cell 1 is controlled by RNC B, and cell 2 is controlled by RNC C.
Step 602: RNC B obtains a call request message from a UE in cell 1, where the call request message includes identity information of cell 1.
Step 603: RNC B sends a cell homing change notification message to the MSC, where the cell homing change notification message includes the identity information of cell 1.
Step 604: The MSC establishes a mapping relationship between identity information of RNC B and the identity information of cell 1 according to the obtained identity information of cell 1, and interacts with RNC B subsequently, so as to provide communication services for the UE in cell 1.
   Up to now, the MSC knows the homing relationship between cell 1 and RNC B, so that RNC B is able to replace RNC A to control cell 1 and provide communication services (including communication services like a subsequent call process and a process of paging the UE in cell 1) for the UE in cell 1 via the MSC. For example, when the MSC needs to page a UE in cell 1, the MSC may determine the identity information of RNC B corresponding to the identity information of cell 1 according to the identity information of cell 1 and the mapping relationship, and then page the UE in cell 1 via RNC B.
Step 605: RNC C obtains a call request message from a UE in cell 2, where the call request message includes identity information of cell 2.
Step 606: RNC C sends a cell homing change notification message to the MSC, where the cell homing change notification message includes the identity information of cell 2.
Step 607: The MSC establishes a mapping relationship between identity information of RNC C and the identity information of cell 2 according to the obtained identity information of cell 2, and interacts with RNC C subsequently, so as to provide communication services for the UE in cell 2.

Up to now, the MSC knows the homing relationship between cell 2 and RNC C, so that RNC C is able to replace RNC A to control cell 2 and provide communication services (including communication services like a subsequent call process and a process of paging the UE in the cell 2) for the UE in cell 2 via the MSC. For example, when the MSC needs to page a UE in cell 2, the MSC may determine the identity information of RNC C corresponding to the identity information of cell 2 according to the identity information of cell 2 and the mapping relationship, and then page the UE in cell 2 via RNC C.

The above steps 602 to 604 and steps 605 to 607 are not executed in a fixed sequence, which will not be limited in this embodiment.

In this embodiment, when the communication between RNC A and MSC is interrupted, the identity information of cell 1 under the control of RNC A and the identity information of cell 2 under the control of RNC A are sent to the MSC via the RNC B and the RNC C, respectively, by using a call management service request message, and then the MSC is able to establish the mapping relationship between RNC B and cell 1 and the mapping relationship between RNC C and cell 2, so that the UE in cell 1 and the UE in cell 2 are able to perform communication services by interacting with the MSC via RNC B and RNC C, respectively. Therefore, the problem that communication services of a UE in a cell cannot be performed normally because the change of cell homing in the RNC group is unknown to the core network can be solved, and it is thereby ensured that the communication services of the UE in the cell in the RNC group can be performed normally.

In this embodiment, NodeBs in a RNC group may adopt a multi-homing solution, that is, one NodeB is connected to two or more RNCs. In this way, even if a crash failure occurs at any one of the RNCs in the RNC group, other RNCs may also be used to provide services.

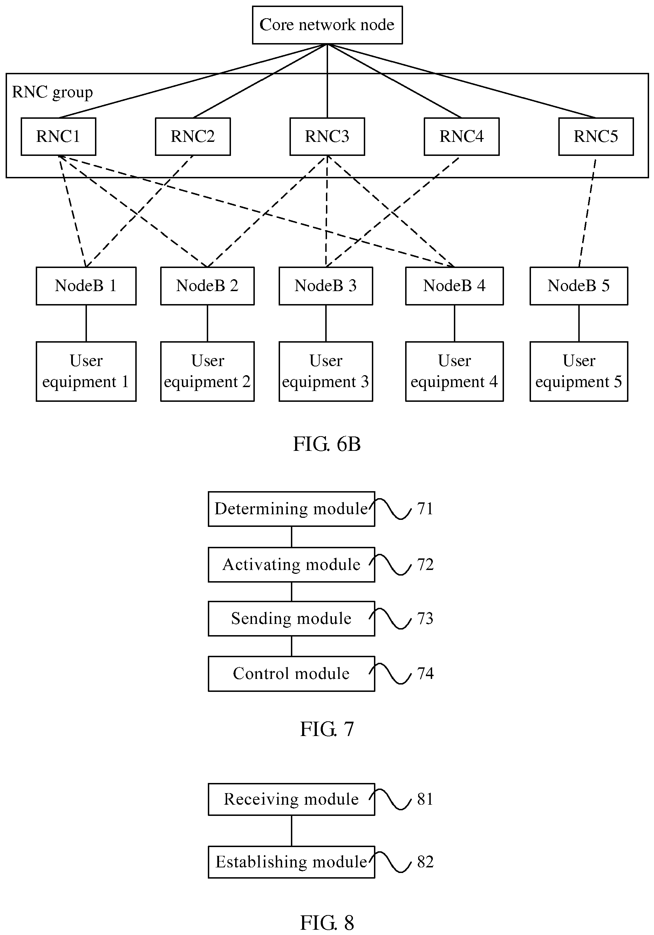

In this embodiment, another backup solution may also be adopted, that is, a load-sharing algorithm. Standby RNCs are configured for NodeBs in a load-balancing manner according to a capacity proportion of the RNCs in the RNC group, that is, standby RNCs corresponding to different NodeBs which are mainly homed to a same active RNC are not necessarily the same. As shown in FIG. 6B, NodeB 1 provides two sets of Iub interfaces, which are connected to two RNCs, respectively. Logical links of the two sets of Iub interfaces may be borne in independent physical links, or be borne in a same physical link. Using independent physical links may avoid a single point failure in this segment of transmission, and transmission reliability is improved. If physical redundancy is impossible, these logical links may be borne in a same physical link, the different logical links are differentiated via an ATM/IP layer at a network side to perform packet switching, and the different logical links are separated from each other, so that packets are sent to different RNCs, respectively.

In the above backup solution, because the RNC group requires that when any RNC fails, the other RNCs should be able to perform the services of the failed RNC instead, each RNC is required to be configured with the configuration information (for example, a cell parameter, a transmission link between a NodeB under the control of a RNC and the current RNC, and a neighboring cell configuration parameter of a NodeB under the control of a RNC) of the cells of all the RNCs in the group. A dual-homed NodeB uses different cell IDs in different homing, but the main-homing cell ID is still used when configuring the neighboring cell.

When an RNC in the RNC group fails, the NodeB under the control of the RNC may still detect that the active RNC fails, and the NodeB is switched to the standby RNC; or the NodeB notifies the active RNC after detecting that the standby RNC fails, the active RNC decides to change a standby RNC, the NodeB selects a new standby RNC in a manner of priority polling, and the process is similar when a configuration manner of RNC N+M load sharing is adopted; and a static standby RNC configuration solution may also be adopted, and at this time, only disaster tolerance of a single RNC is supported.

After the active RNC recovers from the failure, the NodeB under the control of the RNC detects that the active RNC recovers from the failure, and notifies the standby RNC to get ready to switch back to the active RNC. At this time, different standby RNCs switch the NodeB back to the active RNC according to a certain rule, such as defining switching initiation time, blocking the cell, forcibly switching the current call, etc. Thereby, lossless recovery is implemented, load balancing is ensured, and a failure of the active RNC caused by bursts of traffic is avoided. In this embodiment, disaster-tolerance switching for the NodeB may also be limited to some extent to avoid ping-pong switching, for example, a penalty timer is added.

In this embodiment, a communication protocol solution between the core network node and the RNCs is added to notify the core network node of the homing relationship of a cell corresponding to the NodeB. For example, after the active RNC fails, the cell corresponding to the NodeB under the control of the active RNC is switched to the standby RNC, and after the NodeB resumes work, the standby RNC initiates a homing change notification process to the core network node. After receiving a cell homing change notification message, the core network node changes the homing relationship recorded by itself, and may further return confirmation information. The core network node is connected with all the RNCs in the RNC group, and adopts failure detections for availability and takeover.

Specifically, after the active RNC fails, the RNCs in the RNC group calculate a preferred proxy RNC for a signaling point of the failed RNC according to a certain rule (such as signaling point sorting, current access traffic, load, etc) to implement signaling point migration.

A dual-homed NodeB is located in a same location area no matter which RNC the NodeB is homed to, and so it has no impact on the paging of the core network node. Calls initiated by a UE served by the NodeB are initial direct transfers initiated by the RNC currently accessed by the NodeB, so the calls are not affected, either.

Further, in this embodiment, a "NodeB homing record" and a "processing mechanism for transferring signaling to a standby RNC via an Iur interface" may be added for the RNC group. When the transmission between the NodeB and the active RNC fails, the NodeB is switched to a standby RNC, and at this time, the standby RNC notifies each RNC in the RNC group of the NodeB homing situation via the Iur interface. When receiving signaling from the core network node, the active RNC may transfer the signaling to the standby RNC for processing via the Iur interface.

In this embodiment, one RNC should be able to support a single-homed NodeB and a dual-homed NodeB, simultaneously, and support configuration maintenance of the single-homed NodeB and the dual-homed NodeB, including attribute configuration of the NodeB, transmission configuration of the single-homed NodeB, transmission configuration of the dual-homed NodeB, cell configuration of a cell corresponding to the dual-homed NodeB, a cell corresponding to the single-homed NodeB and neighboring cell configuration of the cell corresponding to the single-homed NodeB, and the cell corresponding to the dual-homed NodeB and neighboring cell configuration of the cell corresponding to the dual-homed NodeB . When the dual-homed NodeB is introduced, convenient and efficient configuration maintenance can still be provided, good serviceability is realized, and the impact on the existing OM system architecture is minimized.

In addition, the RNC group may support the use of a man-machine command to modify the current NodeB or the active RNC of the cell corresponding to the current NodeB, or may also support the use of a man-machine command to modify the current NodeB or the standby RNC of the cell corresponding to the current NodeB, or may also support the use of a man-machine command to isolate the RNCs in the RNC group from the group, and support load-balancing adjustment at the same time, thereby facilitating maintenance and upgrade.

In conclusion, for the standby RNC in this embodiment, a solution for adding a communication protocol between the standby RNC and the core network node is adopted. The solution increases utilization rate of the equipment and reliability of the Iub interface, reduces the cost, shortens the duration of service interruption caused by disaster-tolerance switching, and satisfies the high reliability requirement of the operator.

It should be noted that in this embodiment of the present invention, an IuPS interface may adopt a mechanism similar to that of an IuCS interface, and that the interface protocol also needs to be modified, which will not be repeated herein.

It should be noted that the aforementioned method embodiments are described as a combination of a series of actions for simplicity. However, persons skilled in the art should know that the present invention is not limited by the described action sequence because some steps may be performed in any other sequence or performed simultaneously according to the present invention. Furthermore, persons skilled in the art also should know that the embodiments described in the specification are preferred embodiments, and that the related actions and modules may not be necessary for the present invention.

In the above embodiments, each embodiment has its emphasis. For contents not described in detail in one embodiment, reference may be made to related contents in other embodiments.

FIG. 7 is a schematic structural diagram of a standby base station control device according to a fifth embodiment of the present invention. As shown in FIG. 7, the standby base station control device in this embodiment may include a determining module 71, an activating module 72, a sending module 73, and a control module 74.

The determining module 71 determines that a cell under control of an active base station control device needs to be controlled by the standby base station control device, where the standby base station control device and the active base station control device belong to the same base station control device group; the activating module 72 activates configuration information of the cell backed up in the standby base station control device; the sending module 73 sends an uplink signaling message to a core network node, where the uplink signaling message carries identity information of the cell; and the control module 74 controls the cell after the core network node establishes a mapping relationship between the standby base station control device and the cell according to the uplink signaling message, so as to provide communication services for a user equipment in the cell.

Specifically, the uplink signaling message may be an existing protocol message between an access network device and the core network node, including but not limited to an existing message like a call management service request (Call Management Service Request, CM Service Request) message and a location updating request (LOCATION UPDATING REQUEST) message; or the uplink signaling message may also be a newly-extended protocol message between the access network device and the core network node, such as a cell homing change notification message, which will not be limited in this embodiment.

The functions of the first base station control device in the first embodiment of the present invention, BSC B or BSC C in the third embodiment of the present invention, and RNC B or RNC C in the fourth embodiment of the present invention can all be implemented by the standby base station control device provided in this embodiment of the present invention. It should be noted that the so-called "standby base station control device" herein is relative to a cell or a base station, and that for other cells or base stations, this device may act as an active base station control device.

Further, the determining module 71 in this embodiment may specifically be configured to:
in a situation where the core network node works normally, send a handshake message to the active base station control device, and judge whether a response message returned by the active base station control device can be received, and if the response message returned by the active base station control device cannot be received, determine that the cell under the control of the active base station control device needs to be controlled by the standby base station control device; or
determine that the cell under the control of the active base station control device needs to be controlled by the standby base station control device according to a notification message obtained from a base station under the control of the active base station control device, where the notification message is used to notify that a cell corresponding to the base station needs to be controlled by the standby base station control device. Further, the standby base station control device in this embodiment may also further include an obtaining module (not shown), which may be configured to obtain a call request message from the user equipment in the cell, where the call request message includes the identity information of the cell.

In this embodiment, the standby base station control device determines, through the determining module, that the cell under the control of the active base station control device in the same base station control device group needs to be controlled by the standby base station control device, activates, through the activating module, the configuration information of the cell backed up in the standby base station control device, and sends, through the sending module, the uplink signaling message carrying the identity information of the cell to the core network node, so that the control module is able to replace the active base station control device to control the cell after the core network node establishes a mapping relationship between the standby base station control device and the cell according to the uplink signaling message, so as to provide communication services for a user equipment in the cell. In this way, the problem that communication services of a user equipment in a cell cannot be performed normally because the change of cell homing in the base station control device group is unknown to the core network can be solved, and it is thereby ensured that the communication services of the user equipment in the cell in the base station control device group can be performed normally. In addition, in the standby base station control device according to this embodiment, an A-interface signaling message between the standby base station control device and the core network node does not need to be changed, and merely an existing signaling message is used to send the identity information of the cell to the core network node; thereby, the core network node is able to establish the mapping relationship between the standby base station control device and the cell, the existing networking is not affected, and network compatibility can be ensured.

FIG. 8 is a schematic structural diagram of a core network node according to a sixth embodiment of the present invention. As shown in FIG. 8, the core network node according to this embodiment may include a receiving module 81 and an establishing module 82.

The receiving module 81 obtains an uplink signaling message sent by a first base station control device, where the uplink signaling message is sent by the first base station control device after the first base station control device determines that a cell under control of a second base station control device needs to be controlled by the first base station control device, and activates configuration information of the cell backed up in the first base station control device, where the uplink signaling message carries identity information of the cell, and the first base station control device and the second base station control device belong to a same base station control device group. The establishing module 82 establishes a mapping relationship between the first base station control device and the cell according to the uplink signaling message, where the mapping relationship is used in a process in which the first base station control device replaces the second base station control device to control the cell, so as to provide communication services for a user equipment in the cell.

Specifically, the uplink signaling message may be an existing protocol message between an access network device and the core network node, including but not limited to an existing message like a call management service request (Call Management Service Request, CM Service Request) message and a location updating request (LOCATION UPDATING REQUEST) message; or the uplink signaling message may also be a newly-extended protocol message between an access network device and the core network node, such as a cell homing change notification message, which will not be limited in this embodiment.

The functions of both the core network node in the second embodiment of the present invention and the MSC in the third embodiment of the present invention can be implemented by the core network node provided in this embodiment of the present invention.

In this embodiment, after the first base station control device determines that the cell under the control of the second base station control device in the same base station control device group needs to be controlled by the first base station control device, and therefore activates the configuration information of the cell backed up in the first base station control device, the core network node obtains the uplink signaling message carrying identity information of the cell from the first base station control device through the receiving module, so that the establishing module is able to establish the mapping relationship between the first base station control device and the cell according to the uplink signaling message, so that the first base station control device is able to replace the second base station control device to control the cell, so as to provide communication services for the user equipment in the cell. Therefore, the problem that communication services of the user equipment in the cell cannot be performed normally because the change of cell homing in the base station control device group is unknown to the core network can be solved, and it is thereby ensured that the communication services of the user equipment in the cell in the base station control device group can be performed normally. In addition, in the communication method based on a base station control device group according to this embodiment, an A-interface signaling message between the first base station control device and the core network node does not need to be changed, and merely an existing signaling message is used to send the identity information of the cell to the core network node; thereby, the core network node is able to establish the mapping relationship between the first base station control device and the cell, the existing networking is not affected, and network compatibility can be ensured.

Embodiments of the present invention may further provide a communication system based on a base station control device group. The system may include the standby base station control device provided in the fourth embodiment of the present invention and the core network node provided in the fifth embodiment of the present invention. It is understandable that the system may also include a device acting as the active base station control device, and may also include user equipments. The user equipments may also specifically include a calling user equipment and a called user equipment.

Persons of ordinary skill in the art may understand that all or a part of the steps of the methods according to embodiments of the present invention may be implemented by a program instructing relevant hardware. The program may be stored in a computer readable storage medium. When the program runs, the steps of the methods according to the embodiments are performed. The storage medium may be any medium that is capable of storing program codes, such as a ROM, a RAM, a magnetic disk, or an optical disk.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent substitutions to some technical features thereof, without departing from the scope of the technical solutions of embodiments of the present invention.

## Claims

1. A communication method based on a base station control device group, comprising:
determining(201), by a first base station control device, that a cell under control of a second base station control device needs to be controlled by the first base station control device, wherein the first base station control device and the second base station control device belong to a same base station control device group;
activating(202), by the first base station control device, configuration information of the cell backed up in the first base station control device;
sending(203), by the first base station control device, an uplink signaling message to a core network node, wherein the uplink signaling message carries identity information of the cell; and
after the core network node establishes a mapping relationship between the first base station control device and the cell according to the uplink signaling message, replacing(204), by the first base station control device, the second base station control device to control the cell, so as to provide communication services for a user equipment in the cell;
wherein the determining, by the first base station control device, that the cell under the control of the second base station control device needs to be controlled by the first base station control device comprises:
in a situation where the core network node works normally, sending, by the first base station control device, a handshake message to the second base station control device, and judging whether a response message returned by the second base station control device can be received; and
if the response message returned by the second base station control device cannot be received, determining, by the first base station control device, that the cell under the control of the second base station control device needs to be controlled by the first base station control device.

2. The method according to claim 1, wherein: the uplink signaling message is a call management service request message or a location updating request message, and the sending, by the first base station control device, the uplink signaling message to the core network node comprises: sending, by the first base station control device, the call management service request message or the location updating request message to the core network node; or
the uplink signaling message is a cell homing change notification message, and the sending, by the first base station control device, the uplink signaling message to the core network node comprises: sending, by the first base station control device, the cell homing change notification message to the core network node.

3. The method according to claim 2, wherein before the first base station control device sends the uplink signaling message to the core network node, the method further comprises:
obtaining, by the first base station control device, a call request message from the user equipment in the cell, wherein the call request message comprises the identity information of the cell.

4. A communication method based on a base station control device group, comprising:
obtaining(401), by a core network node, an uplink signaling message sent by a first base station control device, wherein the uplink signaling message is sent by the first base station control device after the first base station control device determines that a cell under control of a second base station control device needs to be controlled by the first base station control device, and activates configuration information of the cell backed up in the first base station control device, wherein the uplink signaling message carries identity information of the cell, and the first base station control device and the second base station control device belong to a same base station control device group; and
establishing(402), by the core network node, a mapping relationship between the first base station control device and the cell according to the uplink signaling message, wherein the mapping relationship is used in a process in which the first base station control device replaces the second base station control device to control the cell so as to provide communication services for a user equipment in the cell;
wherein the determining, by the first base station control device, that the cell under the control of the second base station control device needs to be controlled by the first base station control device comprises:
in a situation where the core network node works normally, sending, by the first base station control device, a handshake message to the second base station control device, and judging whether a response message returned by the second base station control device can be received; and
if the response message returned by the second base station control device cannot be received, determining, by the first base station control device, that the cell under the control of the second base station control device needs to be controlled by the first base station control device.

5. The method according to claim 4, wherein: the uplink signaling message is a call management service request message or a location updating request message, and the obtaining, by the core network node, the uplink signaling message from the first base station control device comprises: obtaining, by the core network node, the call management service request message or the location updating request message from the first base station control device; or
the uplink signaling message is a cell homing change notification message, and the obtaining, by the core network node, the uplink signaling message from the first base station control device comprises: obtaining, by the core network node, the cell homing change notification message from the first base station control device.

6. A standby base station control device, comprising:
a determining module(71), configured to determine that a cell under control of an active base station control device needs to be controlled by the standby base station control device, wherein the standby base station control device and the active base station control device belong to a same base station control device group;
an activating module(72), configured to activate configuration information of the cell backed up in the standby base station control device;
a sending module(73), configured to send an uplink signaling message to a core network node, wherein the uplink signaling message carries identity information of the cell; and
a control module(74), configured to control the cell after the core network node establishes a mapping relationship between the standby base station control device and the cell according to the uplink signaling message, so as to provide communication services for a user equipment in the cell;
wherein the determining module is specifically configured to:
in a situation where the core network node works normally, send a handshake message to the active base station control device, and judge whether a response message returned by the active base station control device can be received, and if the response message returned by the active base station control device cannot be received, determine that the cell under the control of the active base station control device needs to be controlled by the standby base station control device.

7. The standby base station control device according to claim 6, wherein: the uplink signaling message is a call management service request message or a location updating request message, and the sending module is configured to send the call management service request message or the location updating request message to the core network node; or
the uplink signaling message is a cell homing change notification message, and the sending module is configured to send the cell homing change notification message to the core network node.

8. The standby base station control device according to claim 7, wherein the standby base station control device further comprises:
an obtaining module, configured to obtain a call request message from the user equipment in the cell, wherein the call request message comprises the identity information of the cell.

9. A communication system based on a base station control device group, comprising the standby base station control device according to any one of claims 6 to 8.

## Patentansprüche

1. Kommunikationsverfahren basierend auf einer Basisstationssteuervorrichtungsgruppe, umfassend:
Bestimmen (201), durch eine erste Basisstationssteuervorrichtung, dass eine Zelle unter Steuerung einer zweiten Basisstationssteuervorrichtung durch die erste Basisstationssteuervorrichtung gesteuert werden muss, wobei die erste Basisstationssteuervorrichtung und die zweite Basisstationssteuervorrichtung zu derselben Basisstationssteuervorrichtungsgruppe gehören;
Aktivieren (202), durch die erste Basisstationssteuervorrichtung, von Konfigurationsinformationen der Zelle, die in der ersten Basisstationssteuervorrichtung gesichert sind;
Senden (203), durch die erste Basisstationssteuervorrichtung, einer Aufwärtsstrecken-Signalisierungsnachricht zu einem Kernnetzknoten, wobei die Aufwärtsstrecken-Signalisierungsnachricht Identitätsinformationen der Zelle führt; und,
nachdem der Kernnetzknoten eine Abbildungsbeziehung zwischen der ersten Basisstationssteuervorrichtung und der Zelle gemäß der Aufwärtsstrecken-Signalisierungsnachricht erstellt, Ersetzen (204), durch die erste Basisstationssteuervorrichtung, der zweiten Basisstationssteuervorrichtung zum Steuern der Zelle, damit Kommunikationsdienste für ein Benutzergerät in der Zelle bereitgestellt werden;
wobei das Bestimmen, durch die erste Basisstationssteuervorrichtung, dass die Zelle unter der Steuerung der zweiten Basisstationssteuervorrichtung durch die erste Basisstationssteuervorrichtung gesteuert werden muss, Folgendes umfasst:
in einer Situation, bei der der Kernnetzknoten normal arbeitet, Senden, durch die erste Basisstationssteuervorrichtung, einer "Handshake"-Nachricht zur zweiten Basisstationssteuervorrichtung und Beurteilen, ob eine Antwortnachricht, die durch die zweite Basisstationssteuervorrichtung zurückgesendet wird, empfangen werden kann; und,
falls die Antwortnachricht, die durch die zweite Basisstationssteuervorrichtung zurückgesendet wird, nicht empfangen werden kann, Bestimmen, durch die erste Basisstationssteuervorrichtung, dass die Zelle unter der Steuerung der zweiten Basisstationssteuervorrichtung durch die erste Basisstationssteuervorrichtung gesteuert werden muss.

2. Verfahren nach Anspruch 1, wobei: die Aufwärtsstrecken-Signalisierungsnachricht eine Anrufmanagementdienst-Anforderungsnachricht oder eine Positionsaktualisierungs-Anforderungsnachricht ist und das Senden, durch die erste Basisstationssteuervorrichtung, der Aufwärtsstrecken-Signalisierungsnachricht zum Kernnetzknoten Folgendes umfasst: Senden, durch die erste Basisstationssteuervorrichtung, der Anrufmanagementdienst-Anforderungsnachricht oder der Positionsaktualisierungs-Anforderungsnachricht zum Kernnetzknoten; oder die Aufwärtsstrecken-Signalisierungsnachricht eine Zellen-"Homing"-Änderungs-Benachrichtigungsnachricht ist und das Senden, durch die erste Basisstationssteuervorrichtung, der Aufwärtsstrecken-Signalisierungsnachricht zum Kernnetzknoten Folgendes umfasst: Senden, durch die erste Basisstationssteuervorrichtung, der Zellen-"Homing"-Änderungs-Benachrichtigungsnachricht zum Kernnetzknoten.

3. Verfahren nach Anspruch 2, wobei das Verfahren, bevor die erste Basisstationssteuervorrichtung die Aufwärtsstrecken-Signalisierungsnachricht zum Kernnetzknoten sendet, ferner Folgendes umfasst:
Erhalten, durch die erste Basisstationssteuervorrichtung, einer Anrufanforderungsnachricht vom Benutzergerät in der Zelle, wobei die Anrufanforderungsnachricht die Identitätsinformationen der Zelle umfasst.

4. Kommunikationsverfahren basierend auf einer Basisstationssteuervorrichtungsgruppe, umfassend:
Erhalten (401), durch einen Kernnetzknoten, einer Aufwärtsstrecken-Signalisierungsnachricht, die durch eine erste Basisstationssteuervorrichtung gesendet wird, wobei die Aufwärtsstrecken-Signalisierungsnachricht durch die erste Basisstationssteuervorrichtung gesendet wird, nachdem die erste Basisstationssteuervorrichtung bestimmt, dass eine Zelle unter Steuerung einer zweiten Basisstationssteuervorrichtung durch die erste Basisstationssteuervorrichtung gesteuert werden muss, und Konfigurationsinformationen der Zelle, die in der ersten Basisstationssteuervorrichtung gesichert sind, aktiviert, wobei die Aufwärtsstrecken-Signalisierungsnachricht Identitätsinformationen der Zelle führt und die erste Basisstationssteuervorrichtung und die zweite Basisstationssteuervorrichtung zu derselben Basisstationssteuervorrichtungsgruppe gehören; und
Erstellen (402), durch den Kernnetzknoten, einer Abbildungsbeziehung zwischen der ersten Basisstationssteuervorrichtung und der Zelle gemäß der Aufwärtsstrecken-Signalisierungsnachricht, wobei die Abbildungsbeziehung in einem Prozess verwendet wird, bei dem die erste Basisstationssteuervorrichtung die zweite Basisstationssteuervorrichtung zum Steuern der Zelle ersetzt, damit Kommunikationsdienste für ein Benutzergerät in der Zelle bereitgestellt werden;
wobei das Bestimmen, durch die erste Basisstationssteuervorrichtung, dass die Zelle unter der Steuerung der zweiten Basisstationssteuervorrichtung durch die erste Basisstationssteuervorrichtung gesteuert werden muss, Folgendes umfasst:
in einer Situation, bei der der Kernnetzknoten normal arbeitet, Senden, durch die erste Basisstationssteuervorrichtung, einer "Handshake"-Nachricht zur zweiten Basisstationssteuervorrichtung und Beurteilen, ob eine Antwortnachricht, die durch die zweite Basisstationssteuervorrichtung zurückgesendet wird, empfangen werden kann; und,
falls die Antwortnachricht, die durch die zweite Basisstationssteuervorrichtung zurückgesendet wird, nicht empfangen werden kann, Bestimmen, durch die erste Basisstationssteuervorrichtung, dass die Zelle unter der Steuerung der zweiten Basisstationssteuervorrichtung durch die erste Basisstationssteuervorrichtung gesteuert werden muss.

5. Verfahren nach Anspruch 4, wobei: die Aufwärtsstrecken-Signalisierungsnachricht eine Anrufmanagementdienst-Anforderungsnachricht oder eine Positionsaktualisierungs-Anforderungsnachricht ist und das Erhalten, durch den Kernnetzknoten, der Aufwärtsstrecken-Signalisierungsnachricht von der ersten Basisstationssteuervorrichtung Folgendes umfasst: Erhalten, durch den Kernnetzknoten, der Anrufmanagementdienst-Anforderungsnachricht oder der Positionsaktualisierungs-Anforderungsnachricht von der ersten Basisstationssteuervorrichtung; oder
die Aufwärtsstrecken-Signalisierungsnachricht eine Zellen-"Homing"-Änderungs-Benachrichtigungsnachricht ist und das Erhalten, durch den Kernnetzknoten, der Aufwärtsstrecken-Signalisierungsnachricht von der ersten Basisstationssteuervorrichtung Folgendes umfasst: Erhalten, durch den Kernnetzknoten, der Zellen-"Homing"-Änderungs-Benachrichtigungsnachricht von der ersten Basisstationssteuervorrichtung.

6. Standby-Basisstationssteuervorrichtung, umfassend:
ein Bestimmungsmodul (71), das ausgelegt ist zum Bestimmen, dass eine Zelle unter Steuerung einer aktiven Basisstationssteuervorrichtung durch die Standby-Basisstationssteuervorrichtung gesteuert werden muss, wobei die Standby-Basisstationssteuervorrichtung und die aktive Basisstationssteuervorrichtung zu derselben Basisstationssteuervorrichtungsgruppe gehören;
ein Aktivierungsmodul (72), das ausgelegt ist zum Aktivieren von Konfigurationsinformationen der Zelle, die in der Standby-Basisstationssteuervorrichtung gesichert sind;
ein Sendemodul (73), das ausgelegt ist zum Senden einer Aufwärtsstrecken-Signalisierungsnachricht zu einem Kernnetzknoten, wobei die Aufwärtsstrecken-Signalisierungsnachricht Identitätsinformationen der Zelle führt; und
ein Steuermodul (74), das ausgelegt ist zum Steuern der Zelle, nachdem der Kernnetzknoten eine Abbildungsbeziehung zwischen der Standby-Basisstationssteuervorrichtung und der Zelle gemäß der Aufwärtsstrecken-Signalisierungsnachricht erstellt, damit Kommunikationsdienste für ein Benutzergerät in der Zelle bereitgestellt werden;
wobei das Bestimmungsmodul spezifisch zu Folgendem ausgelegt ist:
in einer Situation, bei der der Kernnetzknoten normal arbeitet, Senden einer "Handshake"-Nachricht zur aktiven Basisstationssteuervorrichtung und Beurteilen, ob eine Antwortnachricht, die durch die aktive Basisstationssteuervorrichtung zurückgesendet wird, empfangen werden kann; und, falls die Antwortnachricht, die durch die aktive Basisstationssteuervorrichtung zurückgesendet wird, nicht empfangen werden kann, Bestimmen, dass die Zelle unter der Steuerung der aktiven Basisstationssteuervorrichtung durch die Standby-Basisstationssteuervorrichtung gesteuert werden muss.

7. Standby-Basisstationssteuervorrichtung nach Anspruch 6, wobei: die Aufwärtsstrecken-Signalisierungsnachricht eine Anrufmanagementdienst-Anforderungsnachricht oder eine Positionsaktualisierungs-Anforderungsnachricht ist und das Sendemodul ausgelegt ist zum Senden der Anrufmanagementdienst-Anforderungsnachricht oder der Positionsaktualisierungs-Anforderungsnachricht zum Kernnetzknoten; oder
die Aufwärtsstrecken-Signalisierungsnachricht eine Zellen-"Homing"-Änderungs-Benachrichtigungsnachricht ist und das Sendemodul ausgelegt ist zum Senden der Zellen-"Homing"-Änderungs-Benachrichtigungsnachricht zum Kernnetzknoten.

8. Standby-Basisstationssteuervorrichtung nach Anspruch 7, wobei die Standby-Basisstationssteuervorrichtung ferner Folgendes umfasst:
ein Erhaltemodul, das ausgelegt ist zum Erhalten einer Anrufanforderungsnachricht vom Benutzergerät in der Zelle, wobei die Anrufanforderungsnachricht die Identitätsinformationen der Zelle umfasst.

9. Kommunikationssystem basierend auf einer Basisstationssteuervorrichtungsgruppe, das die Standby-Basisstationssteuervorrichtung nach einem der Ansprüche 6 bis 8 umfasst.

## Revendications

1. Procédé de communication basé sur un groupe de dispositifs de commande de station de base, consistant à :
déterminer (201), grâce à un premier dispositif de commande de station de base, qu'une cellule sous commande d'un deuxième dispositif de commande de station de base doit être commandée par le premier dispositif de commande de station de base, le premier dispositif de commande de station de base et le deuxième dispositif de commande de station de base appartenant à un même groupe de dispositifs de commande de station de base ;
activer (202), grâce au premier dispositif de commande de station de base, des informations de configuration de la cellule sauvegardées dans le premier dispositif de commande de station de base ;
envoyer (203), grâce au premier dispositif de commande de station de base, un message de signalisation de liaison montante à un noeud de réseau central, le message de signalisation de liaison montante acheminant des informations d'identité de la cellule ; et
après que le noeud de réseau central a établi une relation de mappage entre le premier dispositif de commande de station de base et la cellule en fonction du message de signalisation de liaison montante, remplacer (204), grâce au premier dispositif de commande de station de base, le deuxième dispositif de commande de station de base pour commander la cellule, de façon à fournir des services de communication pour un équipement utilisateur dans la cellule ;
dans lequel la détermination, par le premier dispositif de commande de station de base, que la cellule sous commande du deuxième dispositif de commande de station de base doit être commandée par le premier dispositif de commande de station de base consiste à :
dans une situation où le noeud de réseau central fonctionne normalement, envoyer, par le premier dispositif de commande de station de base, un message d'établissement de liaison au deuxième dispositif de commande de station de base, et juger si un message de réponse renvoyé par le deuxième dispositif de commande de station de base peut être reçu ou non ; et
si le message de réponse renvoyé par le deuxième dispositif de commande de station de base ne peut pas être reçu, déterminer, grâce au premier dispositif de commande de station de base, que la cellule sous commande du deuxième dispositif de commande de station de base doit être commandée par le premier dispositif de commande de station de base.

2. Procédé selon la revendication 1, dans lequel : le message de signalisation de liaison montante est un message de requête de service de gestion d'appel ou un message de requête de mise à jour de localisation, et l'envoi, par le premier dispositif de commande de station de base, du message de signalisation de liaison montante au noeud de réseau central consiste à : envoyer, par le premier dispositif de commande de station de base, le message de requête de service de gestion d'appel ou le message de requête de mise à jour de localisation au noeud de réseau central ; ou
le message de signalisation de liaison montante est un message de notification de changement d'hébergement de cellule, et l'envoi, grâce au premier dispositif de commande de station de base, du message de signalisation de liaison montante au noeud de réseau central consiste à : envoyer, grâce au premier dispositif de commande de station de base, le message de notification de changement d'hébergement de cellule au noeud de réseau central.

3. Procédé selon la revendication 2, dans lequel avant que le premier dispositif de commande de station de base envoie le message de signalisation de liaison montante au noeud de réseau central, le procédé consiste en outre à :
obtenir, par le premier dispositif de commande de station de base, un message de requête d'appel provenant de l'équipement utilisateur dans la cellule, le message de requête d'appel comprenant les informations d'identification de la cellule.

4. Procédé de communication basé sur un groupe de dispositifs de commande de station de base, consistant à :
obtenir (401), par un noeud de réseau central, un message de signalisation de liaison montante envoyé par un premier dispositif de commande de station de base, le message de signalisation de liaison montante étant envoyé par le premier dispositif de commande de station de base après que le premier dispositif de commande de station de base a déterminé qu'une cellule sous commande d'un deuxième dispositif de commande de station de base doit être commandée par le premier dispositif de commande de station de base, et active des informations de configuration de la cellule sauvegardées dans le premier dispositif de commande de station de base, le message de signalisation de liaison montante acheminant des informations d'identité de la cellule, et le premier dispositif de commande de station de base et le second dispositif de commande de station de base appartiennent à un même groupe de dispositifs de commande de station de base ; et
établir (402), grâce au noeud de réseau central, une relation de mappage entre le premier dispositif de commande de station de base et la cellule en fonction du message de signalisation de liaison montante, la relation de mappage étant utilisée dans un processus dans lequel le premier dispositif de commande de station de base remplace le deuxième dispositif de commande de station de base pour commander la cellule de façon à fournir des services de communication à un équipement utilisateur dans la cellule ;
dans lequel la détermination, grâce au premier dispositif de commande de station de base, que la cellule sous commande du deuxième dispositif de commande de station de base doit être commandée par le premier dispositif de commande de station de base consiste à :
dans une situation où le noeud de réseau central fonctionne normalement, envoyer, grâce au premier dispositif de commande de station de base, un message d'établissement de liaison au deuxième dispositif de commande de station de base, et juger si un message de réponse renvoyé par le deuxième dispositif de commande de station de base peut être reçu ou non ; et
si le message de réponse renvoyé par le deuxième dispositif de commande de station de base ne peut pas être reçu, déterminer, grâce au premier dispositif de commande de station de base, que la cellule sous commande du deuxième dispositif de commande de station de base doit être commandée par le premier dispositif de commande de station de base.

5. Procédé selon la revendication 4, dans lequel : le message de signalisation de liaison montante est un message de requête de service de gestion d'appel ou un message de requête de mise à jour de localisation, et l'obtention, par le noeud de réseau central, du message de signalisation de liaison montante à partir du premier dispositif de commande de station de base consiste à : obtenir, par le noeud de réseau central, le message de requête de service de gestion d'appel ou le message de requête de mise à jour de localisation à partir du premier dispositif de commande de station de base ; ou le message de signalisation de liaison montante est un message de notification de changement d'hébergement de cellule, et l'obtention, par le noeud de réseau central, du message de signalisation de liaison montante à partir du premier dispositif de commande de station de base consiste à : obtenir, par le noeud de réseau central, le message de notification de changement d'hébergement de cellule à partir du premier dispositif de commande de station de base.

6. Dispositif de commande de station de base en veille, comprenant :
un module de détermination (71), conçu pour déterminer qu'une cellule sous commande d'un dispositif de commande de station de base actif doit être commandée par le dispositif de commande de station de base en veille, le dispositif de commande de station de base en veille et le dispositif de commande de station de base actif appartenant à un même groupe de dispositifs de commande de station de base ;
un module d'activation (72), conçu pour activer des informations de configuration de la cellule sauvegardées dans le dispositif de commande de station de base en veille ;
un module d'envoi (73), conçu pour envoyer un message de signalisation de liaison montante à un noeud de réseau central, le message de signalisation de liaison montante acheminant des informations d'identité de la cellule ; et
un module de commande (74), conçu pour commander la cellule après que le noeud de réseau central a établi une relation de mappage entre le dispositif de commande de station de base en veille et la cellule en fonction du message de signalisation de liaison montante, de façon à fournir des services de communication à un équipement utilisateur dans la cellule ;
dans lequel le module de détermination est conçu spécifiquement pour :
dans une situation où le noeud de réseau central fonctionne normalement, envoyer un message d'établissement de liaison au dispositif de commande de station de base actif, et juger si un message de réponse renvoyé par le dispositif de commande de station de base actif peut être reçu ou non, et si le message de réponse renvoyé par le dispositif de commande de station de base actif ne peut pas être reçu, déterminer que la cellule sous commande du dispositif de commande de station de base actif doit être commandée par le dispositif de commande de station de base en veille.

7. Dispositif de commande de station de base en veille selon la revendication 6, dans lequel : le message de signalisation de liaison montante est un message de requête de service de gestion d'appel ou un message de requête de mise à jour de localisation, et le module d'envoi est conçu pour envoyer le message de requête de service de gestion d'appel ou le message de requête de mise à jour de localisation au noeud de réseau central ; ou
le message de signalisation de liaison montante est un message de notification de changement d'hébergement de cellule, et le module d'envoi est conçu pour envoyer le message de notification de changement d'hébergement de cellule au noeud de réseau central.

8. Dispositif de commande de station de base en veille selon la revendication 7, dans lequel le dispositif de commande de station de base en veille comprend en outre :
un module d'obtention, conçu pour obtenir un message de requête d'appel provenant de l'équipement utilisateur dans la cellule, le message de requête d'appel comprenant les informations d'identification de la cellule.

9. Système de communication basé sur un groupe de dispositifs de commande de station de base, comprenant le dispositif de commande de station de base en veille selon l'une quelconque des revendications 6 à 8.
